(19) Europäisches Patentamt
European Patent Office
Office européen des brevets

(11) **EP 3 457 168 B1**

(12) **FASCICULE DE BREVET EUROPEEN**

(45) Date de publication et mention de la délivrance du brevet:
**05.10.2022 Bulletin 2022/40**

(21) Numéro de dépôt: **18195307.6**

(22) Date de dépôt: **18.09.2018**

(51) Classification Internationale des Brevets (IPC):
**G01S 7/41** *(2006.01)*   **G01S 13/90** *(2006.01)*

(52) Classification Coopérative des Brevets (CPC):
**G01S 7/414; G01S 13/9027;** G01S 13/9064

(54) **PROCEDE D'ATTENUATION DES ARTEFACTS LIES AUX VAGUES D'ETRAVE OU AU SILLAGE SUR DES IMAGES RADAR D'UN NAVIRE**

VERFAHREN ZUR ABSCHWÄCHUNG DER ARTEFAKTE IN VERBINDUNG MIT BUGSTRAHLWELLEN ODER SOGWELLEN AUF RADARBILDERN EINES SCHIFFES

METHOD OF MITIGATING ARTIFACTS DUE TO BOW WAVES OR STERN WAKE ON RADAR IMAGES OF A VESSEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2017 FR 1700942**

(43) Date de publication de la demande:
**20.03.2019 Bulletin 2019/12**

(73) Titulaire: **Thales**
**92400 Courbevoie (FR)**

(72) Inventeurs:
• **BON, Nicolas**
**29238 BREST CEDEX 3 (FR)**
• **GENIN, Jean-Baptiste**
**78990 ELANCOURT (FR)**
• **SIMON, Mathieu**
**78990 ELANCOURT (FR)**

(74) Mandataire: **Lavoix**
**2, place d'Estienne d'Orves**
**75441 Paris Cedex 09 (FR)**

(56) Documents cités:
• **CROSS PATRICK L: "Maritime automated targets recognition algorithm test bed for high resolution ISAR imagery", 2013 IEEE INTERNATIONAL CONFERENCE ON TECHNOLOGIES FOR HOMELAND SECURITY (HST), IEEE, 12 novembre 2013 (2013-11-12), pages 369-374, XP032550208, DOI: 10.1109/THS.2013.6699032**
• **VALIN P ET AL: "Hierarchical ship classifier for airborne synthetic aperture radar (SAR) images", SIGNALS, SYSTEMS, AND COMPUTERS, 1999. CONFERENCE RECORD OF THE THIRTY -THIRD ASILOMAR CONFERENCE ON OCT. 24-27, 1999, PISCATAWAY, NJ, USA,IEEE, US, 24 octobre 1999 (1999-10-24), page 1230, XP032142056, DOI: 10.1109/ACSSC.1999.831903 ISBN: 978-0-7803-5700-6**

**EP 3 457 168 B1**

**Description**

La présente invention concerne l'imagerie radar de cibles marines.

Les navires fournissent des informations auto-déclaratives qui donnent l'identification, la position, la route et les dimensions (longueur et largeur) du navire, selon un système d'identification automatique, connu sous l'acronyme AIS (« Automated Identification System »).

Il est utile d'être en mesure de vérifier les informations fournies par un navire, afin de détecter un navire suspect, dans un contexte civil ou militaire.

Il est connu d'utiliser les informations fournies par un radar afin de classifier un navire, c'est-à-dire de pouvoir associer à ce navire une classe (telle que la classe pétrolier, vraquier, porte-conteneur, bateau de pêche, etc.), afin de vérifier la cohérence des informations qu'il fournit avec les informations correspondantes de la classe à laquelle il est associé.

Actuellement, la classification d'un navire est réalisée à partir d'images radar, par exemple SAR (« Synthetic Aperture Radar ») ou ISAR (« Inverse Synthetic Aperture Radar »). Une image SAR fournit plutôt une vue de dessus du navire, tandis qu'une image ISAR fournit plutôt une vue de profil.

Une image radar est ici une image distance-Doppler. Il s'agit d'une matrice I(x,y) d'échantillons. Chaque échantillon correspond à la puissance réfléchie par un objet réfléchissant. Chaque colonne de cette matrice (axe x) correspond à une distance entre l'objet réfléchissant et l'antenne radar, et chaque ligne (axe y) correspond à un décalage en fréquence causé par l'effet Doppler et indicatif d'une vitesse relative entre l'objet réfléchissant et l'antenne radar. Les grandeurs de distance et de décalage en fréquence étant échantillonnées avec des pas prédéterminés, on parlera de case distance et de case Doppler pour chaque coordonnée d'un échantillon.

Une image radar ne comporte pas uniquement le signal rétrodiffusé par le navire d'intérêt, mais également d'autres signaux qui viennent gêner l'interprétation des images.

En particulier, les vagues d'étrave ou le sillage du navire produisent des artefacts de fortes intensités sur les images Distance-Doppler. Ils prennent la forme de trainées très étendues dans le domaine spectral (selon l'axe y ou axe vertical) et étroites dans le domaine spatial (selon l'axe x ou axe horizontal).

Si l'image radar brute n'est pas traitée pour éliminer ces artefacts, la classification du navire est fortement dégradée.

Il a été proposé différents procédés afin de traiter une image radar brute pour éliminer les artefacts dus aux vagues d'étrave et au sillage d'un navire.

Par exemple l'article de L. GAGNON et al. « Hierarchical Classifier Design for Airborne SAR Images of Ships », SPIE Proc. #3371, conférence « Automatic Target Récognition VIII », Orlando, 1998, décrit un procédé pour atténuer des trainées verticales consistant à effectuer un seuillage colonne par colonne, puis ligne par ligne, de l'image radar brute. Pour ce faire, les statistiques du bruit sont estimées sur les bords de la colonne (respectivement de la ligne) en cours de traitement, puis un seuil est déterminé à partir de la moyenne et de la variance de ces statistiques. Enfin, les petites zones de l'image seuillée non connectées sont éliminées si elles sont isolées et si leur étendue spatiale est suffisante.

Pour ce procédé, il est difficile de définir un seuil adapté car la nature du phénomène causant l'artefact n'est pas uniforme, ce qui rend les résultats de la mise en œuvre de ce procédé de l'état de la technique assez variables.

Des tests menés montrent en particulier des dégradations préjudiciables sur les structures du navire. Or, ce sont justement ces structures qui permettent la classification d'un navire.

Par exemple encore, l'article de CROSS PATRICK L, "Maritime automated targets recognition algorithm test bed for high résolution ISAR imagery", 2913 IEEE INTERNATIONAL CONFERENCE ON TECHNOLOGIES FOR HOMELAND SECURITY(HST), IEEE, 12 novembre 2013, pages 369 - 314, divulgue un algorithme de reconnaissance de cibles maritimes prévoyant l'atténuer les effets des vagues d'étrave : les zones d'artefacts dues aux vagues d'étrave ou de sillage sont détachées de la coque du navire en appliquant tout d'abord une technique d'érosion qui permet d'obtenir une image intermédiaire comportant des blocs mitoyens ; puis, différents algorithmes sont appliqués à l'image intermédiaire de manière à caractériser les blocs et pouvoir séparer celui correspondant à la coque d'un navire de ceux correspondants aux artefacts.

Le but de l'invention est de résoudre ce problème, notamment en proposant un procédé alternatif à ceux de l'état de la technique.

Pour cela l'invention a pour objet un procédé d'atténuation des artefacts liés aux vagues d'étrave ou au sillage sur des images radar d'un navire conforme aux revendications annexées. L'invention a également pour objet un système radar mettant en oeuvre le procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- La figure 1 est une représentation sous forme d'un schéma blocs d'un mode de réalisation préféré du procédé de traitement d'image radar selon l'invention ;
- la figure 2 est un schéma permettant d'expliquer les étapes de création d'un masque su navire du procédé de la figure 1 ;
- la figure 3 est une image radar source avant traitement ;
- la figure 4 est une image des zones d'artefact extraite de la figure 3 ;
- la figure 5 est une image d'un masque du navire extraite de la figure 3 ; et,
- la figure 6 est une image radar délivré en sortie du procédé de la figure 1 à partir de l'image de la figure 3 et en utilisant les images des figures 4 et 5.

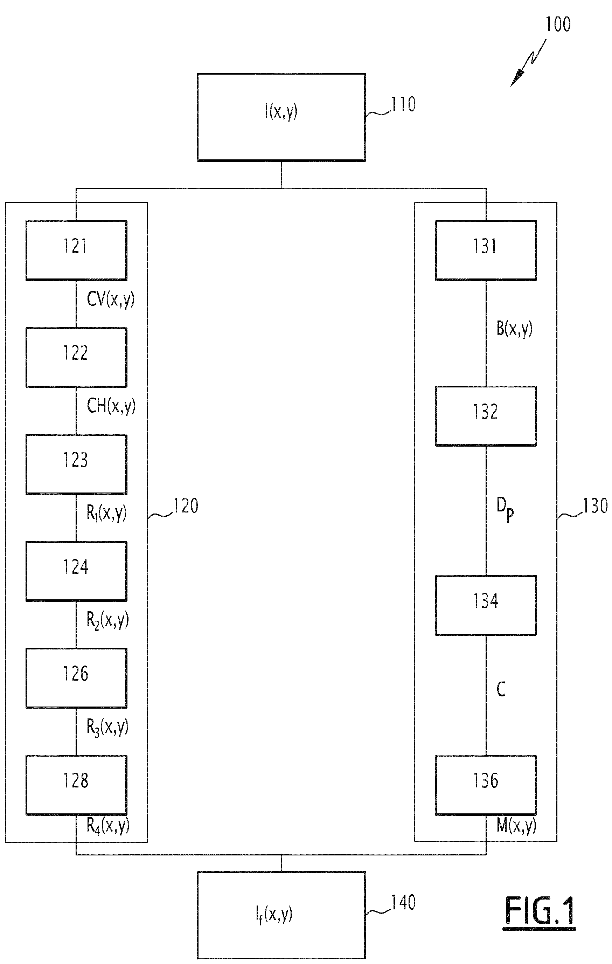

Un mode de réalisation du procédé d'atténuation des artefacts liés aux vagues d'étrave ou au sillage sur des images radar selon l'invention est présenté sur la figure 1.

Ce procédé 100 est par exemple mis en oeuvre lors de l'exécution des instructions d'un programme informatique par un calculateur. Le calculateur est par exemple celui d'un système radar embarqué à bord d'un aéronef comportant un dispositif radar propre à acquérir des images radar, de préférence du type SAR ou ISAR.

Le procédé 100 comporte quatre étapes principales :

- une étape 110 d'acquisition d'une image Distance-Doppler et son prétraitement ;
- une étape 120 d'extraction des zones de l'image source correspondant à des artéfacts dus aux vagues d'étrave ou au sillage du navire. Ces zones d'artéfact prennent la forme de bandes verticales sur l'image source. L'extraction ne se limite pas uniquement à ces phénomènes qui sont localisés près de la proue et de la poupe du navire, puisque la recherche de zones d'intérêt se fait sur la globalité de l'image source. Ainsi, des artéfacts produits par d'autres phénomènes peuvent potentiellement être extraits, par exemple ceux dus à des parties tournantes du navire ;
- une étape 130 d'élaboration d'un masque du navire, qui va être utilisé de manière à ne pas dégrader la partie de l'image source correspondant au navire à identifier. Cette étape permet de pallier un défaut majeur des différents procédés de l'état de l'art, qui est la dégradation des structures du navire ; et,
- une étape 140 d'atténuation, sur l'image source, de la portion des zones d'artéfact qui se trouvent hors du masque du navire.

Etape 110

Le procédé 100 débute par l'acquisition d'une image Distance-Doppler, par exemple une image brute délivrée par le dispositif radar.

Avantageusement, l'étape 110 comporte un prétraitement consistant en un lissage du bruit de l'image brute. Ce lissage est par exemple réalisé en faisant le produit de convolution de l'image brute avec un noyau gaussien, dont la taille est typiquement de trois cases distance par trois cases Doppler.

Une image source est délivrée en sortie de l'étape 110. Elle est notée I(x,y).

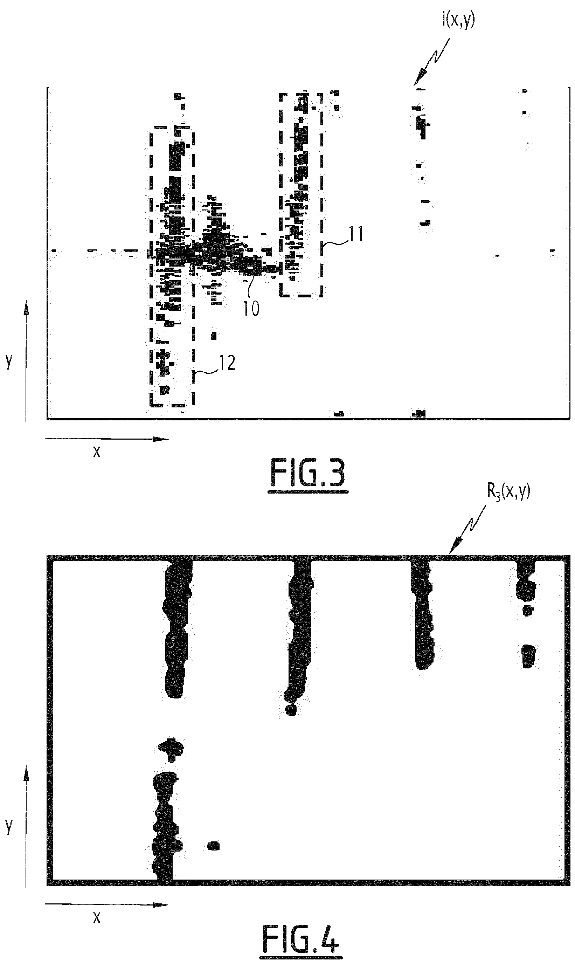

La figure 3 représente une image source I(x,y) à nettoyer. On voit que l'écho 10 du navire d'intérêt est brouillé par deux zones d'artéfact 11 et 12, respectivement à la proue du navire (vague d'étrave) et à la poupe du navire (sillage du navire).

Etape 120

L'étape 120 d'extraction des zones d'artefact dus aux vagues d'étrave ou au sillage du navire est fondée sur les propriétés morphologiques de tels artefacts :

- un artefact est étendu sur l'axe y Doppler (dans certains cas, un artefact peut même être réparti sur tout le domaine spectral de l'image source) ;
- un artefact est localisé sur l'axe x distance et sa largeur est réduite à seulement quelques cases distance.

Le critère d'identification d'une zone d'artefact est ainsi une zone qui présente un fort contraste horizontal CH (c'est-à-dire selon l'axe x distance) et un faible contraste vertical CV (c'est-à-dire selon l'axe y Doppler).

Ainsi, dans les sous-étapes 121 et 122, sont respectivement calculés le contraste vertical CV(x,y) et le contraste horizontal CH(x,y) pour chaque échantillon (x,y) de l'image source I(x,y).

Le contraste d'un échantillon est déterminé en comparant la puissance de cet échantillon avec celle d'un ou plusieurs échantillons voisins, qui sont situés sur la même ligne pour le contraste horizontal CH et sur la même colonne pour le contraste vertical CV.

Par exemple une technique LO-TFAC, connue de l'homme du métier, est utilisée qui consiste à associer à chaque échantillon une puissance de référence, définie comme la puissance moyenne la plus faible parmi deux bandes de cases de référence situées de part et d'autre de l'échantillon considéré : à gauche et à droite pour le contraste horizontal CV et au-dessus et au-dessous pour le contraste vertical CV. Avantageusement, des cases de gardes sont interposées entre l'échantillon considéré et les bandes de cases de référence. Le contraste est ensuite déterminé en calculant le rapport de la puissance de l'échantillon considéré avec la puissance de référence associée.

A la sous-étape 123, une image de rapport de contraste $R_1(x,y)$ est obtenue. La valeur d'un échantillon (x,y) de cette image correspond au rapport CH/CV pour l'échantillon (x,y) correspondant de l'image source I(x,y).

A la sous-étape 124, l'image de rapport de contraste $R_1(x,y)$ est seuillée et binarisée. Pour chaque échantillon (x,y), le rapport CH/CV est ainsi comparé à un rapport seuil prédéterminé et si le rapport CH/CV est supérieur à ce rapport seuil, l'échantillon (x,y) prend la valeur unité. Sinon, il prend la valeur nulle. Une image de rapport de contraste binaire R2(x,y) est ainsi obtenue.

Puis, au cours de la sous-étape 126, différentes opérations morphologiques d'ouverture et de fermeture sont appliquées sur l'image R2(x,y) afin de supprimer les zones de petite taille et isolées ou au contraire de combler les trous dans les zones de grande taille. Les opérations mathématiques correspondantes sont connues de l'homme du métier. Une image des zones d'artefact R3(x,y) est obtenue.

La figure 4 représente ainsi l'image des zones d'artefact R3(x,y) obtenue à partir de l'image source I(x,y) de la figure 3.

Avantageusement, à la sous étape 128, l'image des zones d'artefact R3(x,y), qui est une image binaire Distance-Doppler, est convoluée avec un noyau uniforme rectangulaire, par exemple de cinquante cases Doppler par cinq cases distance. Cette opération supplémentaire permet de mettre davantage en évidence les zones ayant une grande extension verticale et une faible extension distance, caractéristiques de l'artefact recherché. Sur l'image des zones d'artefact améliorée $R_4(x,y)$ obtenue, plus l'intensité est élevée, plus la zone d'artefact est de taille importante.

Etape 130

L'étape 130 de création d'un masque M(x,y) débute par une sous-étape 131 consistant à binariser l'image source I(x,y) pour obtenir une image binaire B(x,y).

Un échantillon (x,y) de l'image binaire B(x,y) prend la valeur unité lorsque l'échantillon (x,y) correspondant de l'image source I(x,y) présente une puissance supérieure à un seuil ajusté dynamiquement.

Par exemple le seuil est ajusté à parti d'une fonction CCDF(z) (« complementary cumulative density function » en anglais), qui est équivalente à 1-F(z) où F(z) est la fonction de répartition des puissances des échantillons de l'image source I(x,y). La fonction CCDF(z) représente la probabilité qu'un échantillon de l'image source I(x,y) ait une puissance supérieure à z. Le seuil est alors déterminé tel que :

$$\log_{10} ccdf(z) = -2.5$$

Afin de ne pas prendre en compte les artefacts liés au vagues d'étrave ou au sillage dans l'élaboration du masque, l'image binaire B(x,y) est également nettoyée des échantillons (x,y) qui correspondent à ces phénomènes, c'est-à-dire aux échantillons dont le rapport CH/CV, calculé à l'étape 123, est supérieur à un seuil.

A la sous-étape 132, la droite de pont Dp du navire est estimée par un algorithme, similaire à la transformée de Hough, connue de l'homme du métier.

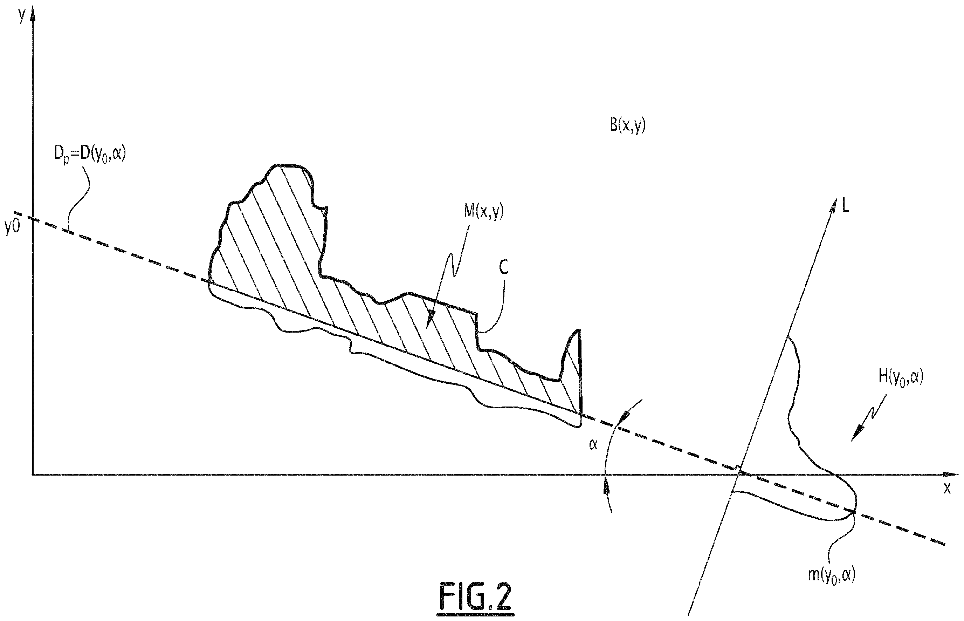

Il s'agit de rechercher, dans l'image binaire B(x,y), un maximum dans le nombre d'échantillons de valeur unité alignés. Ceci est illustré sur la figure 2.

On trace une droite D(y0,$\alpha$) sur l'image binaire B(x,y), où $y_0$ est l'ordonnée à l'origine de la droite D(y0,$\alpha$) et $\alpha$ l'angle entre la droite D(y0,$\alpha$) et l'axe x, telles que :

$$y_0 = y - x \tan \alpha$$

Puis un histogramme H(y0,$\alpha$) est construit à partie de la distance L entre chaque échantillon de valeur unité et la droite D(y0,$\alpha$). Avantageusement, l'histogramme H(y0,$\alpha$) est seuillé afin d'éliminer certains phénomènes parasites.

Le maximum de l'histogramme H(y0,$\alpha$) est noté m(y0,$\alpha$).

En faisant varier $y_0$ et $\alpha$ on cherche les valeurs de ces deux paramètres qui conduisent à la plus grande valeur possible pour m(y0,$\alpha$).

La droite correspondante est la droite de pont Dp. C'est ce cas qui est représenté à la figure 2.

Dans la sous-étape 134, l'orientation haut / bas du navire est déterminée à partir de la droite de pont Dp, en considérant que le château du navire est en haut de l'image binaire B(x,y), c'est-à-dire au-dessus de la droite de pont Dp.

Lors de la sous-étape 136, le masque du navire M(x,y) est formé par remplissage de la zone entre la droite de pont Dp (constituant le contour inférieur du masque du navire) et le contour supérieur du navire C.

Le contour C est extrait en mesurant le contraste entre chaque échantillon de l'image binaire B(x,y) et une bande de référence située au-dessus de l'échantillon considéré, puis en ne conservant que les échantillons de plus fort contraste.

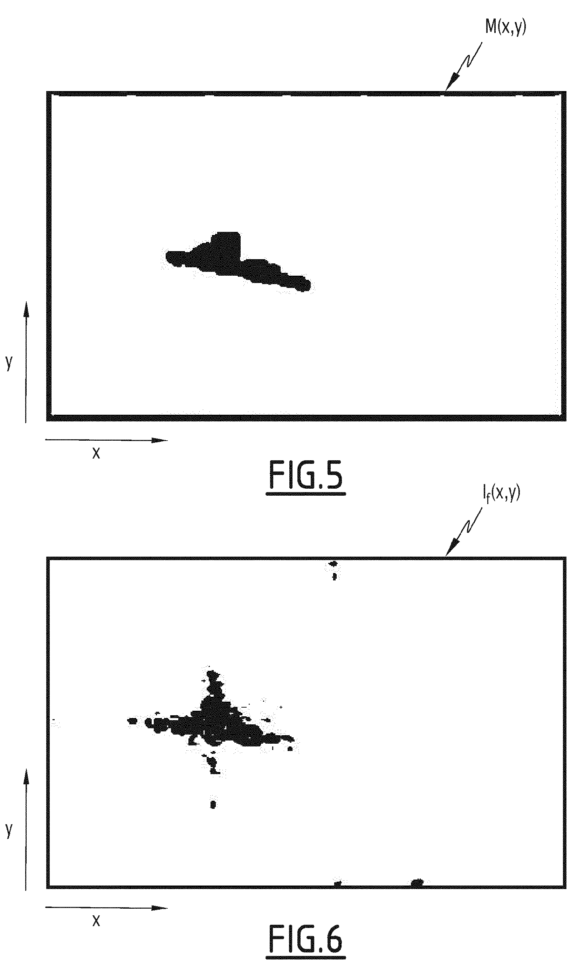

Le masque M(x,y) obtenu à partir de l'image source I(x,y) de la figure 3 est représenté à la figure 5.

Le mode de réalisation venant d'être décrit est mieux adapté à des images source de type ISAR, parce qu'elles s'apparentent à une vue de profil du navire et font donc apparaître la droite de pont du navire plus clairement. Cependant, sur une grande partie des images de type SAR, la droite de pont peut être assimilée à l'arête bâbord ou tribord du navire. Le même algorithme peut ainsi être utilisé sur les images source de type SAR.

Etape 140

La dernière étape consiste à atténuer les échantillons (x,y) de l'image source I(x,y) qui correspondent à des artéfacts de vagues d'étrave ou de sillage.

Le facteur d'atténuation utilisé est le rapport du contraste horizontal CH(x,y) sur le contraste vertical CV(x,y) calculé à l'étape 123.

L'image atténuée $I_f$(x,y) (en dB) s'exprime alors de la manière suivante :

$$I_f(x,y) = I(x,y) - 10\log_{10}(CH(x,y)/CV(x,y))$$

Ce facteur d'atténuation est appliqué uniquement pour les échantillons (x,y) qui se trouvent dans les zones d'artefact définis par l'image des zones d'artefact R3(x,y) (ou préférentiellement de l'image des zones d'artefact améliorée $R_4$(x,y)) et hors du masque M(x,y).

L'image atténuée If(x,y) obtenue à partir de l'image source I(x,y) de la figure 3 est représentée à la figure 6.

On notera que le fait de définir le masque du navire comme recouvrant la partie supérieure de l'image du navire permet de ne pas dégrader les structures hautes du navire qui permettent son identification. La partie inférieure de l'image du navire correspondant à la coque de celui-ci n'est donc pas protégée lors de l'étape d'atténuation, ce qui est avantageux dans la suppression des artefacts dus aux vagues d'étrave et de sillage qui sont maximales au niveau de la partie inférieure de l'image du navire.

**Revendications**

1. Procédé (100) d'atténuation des artefacts liés aux vagues d'étrave ou au sillage sur des images radar d'un navire, comportant une étape consistant à :

- acquérir (110) une image radar (I(x,y)) d'un navire, ladite image acquise étant une image Distance-Doppler ;

le procédé comporte, en outre, les étapes consistant à :

- extraire (120) de l'image radar (I(x,y)) la ou chaque zone d'artefact qui correspond à un artéfact dû aux vagues d'étrave ou au sillage du navire, l'extraction étant fondée sur le fait que la ou chaque zone d'artéfact (11, 12) s'étend sur une bande parallèle à l'axe Doppler, l'extraction conduisant à une image des zones d'artefacts ($R_3$(x,y)) ;
- élaborer (130) un masque du navire (M(x,y)) ; et,
- atténuer (140) les échantillons de l'image radar (I(x,y)) qui appartiennent à la ou chaque zone d'artéfact de l'image des zones d'artefacts ($R_3$(x,y)) et qui se trouvent hors du masque du navire (M(x,y)) de manière à obtenir une l'image atténuée ($I_f$(x,y)),

**caractérisé en ce que** l'étape consistant à extraire (120) la ou chaque zone d'artefact est fondée sur le calcul du rapport d'un contraste vertical (CV(x,y)) selon l'axe distance sur un contraste horizontal (CH(x,y)) selon l'axe Doppler de l'image radar (I(x,y)) et la sélection d'une zone d'artefact en tant que zone à l'intérieur de laquelle ledit rapport est supérieur à un rapport seuil, un contraste d'un échantillon étant déterminé en comparant la puissance dudit échantillon avec celle d'un ou plusieurs échantillons voisins, qui sont situés sur la même ligne pour le contraste horizontal et sur la même colonne pour le contraste vertical.

**2.** Procédé (100) selon la revendication 1, dans lequel l'image radar (I(x,y)) est une image radar SAR ou une image radar ISAR.

**3.** Procédé (100) selon la revendication 1 ou la revendication 2, dans lequel le ou chaque zone à l'intérieur de laquelle ledit rapport est supérieur à un rapport seuil subit une opération morphologique d'ouverture ou de fermeture avant d'être associée à une zone d'artefact.

**4.** Procédé (100) selon l'une quelconque des revendications précédentes, dans lequel le ou chaque zone à l'intérieur de laquelle ledit rapport est supérieur à un rapport seuil est pondérée en fonction de son extension avant d'être associée à une zone d'artefact.

**5.** Procédé selon (100) l'une quelconque des revendications précédentes, dans lequel l'étape d'élaboration (130) d'un masque du navire (M(x,y)) consiste à :

- appliquer un seuil sur l'image radar (I(x,y)) de manière à obtenir une image seuillée ;
- associer la valeur unité à chaque échantillon dépassant ledit seuil et la valeur nulle sinon, de manière à obtenir une image binaire (B(x,y)) ;
- déterminer une droite de pont (Dp) à partir de l'image binaire, la droite de pont constituant un contour inférieur du masque du navire ;
- déterminer le contour supérieur (C) du masque du navire à partir d'une grandeur correspondant à une variation selon l'axe Doppler d'un contraste de l'image binaire (B(x,y)).

**6.** Procédé (100) selon l'une quelconque des revendications précédentes, dans lequel l'image atténuée $I_f(x,y)$ s'exprime à partir de l'image radar (I(x,y)) selon la relation :

$$I_f(x,y) = I(x,y) - 10\log_{10}(C_H(x,y)/C_V(x,y))$$

pour les échantillons qui se trouvent dans le ou chaque zone d'artefact et hors du masque du navire.

**7.** Système radar, **caractérisé en ce qu'**il met en oeuvre un procédé d'atténuation des artefacts liés aux vagues d'étrave ou au sillage sur des images radar d'un navire conforme à l'une quelconque des revendications 1 à 6.

**Patentansprüche**

**1.** Verfahren (100) zum Abschwächen von Artefakten, die mit Bugwellen oder Kielwasser in Radarbildern eines Schiffs verbunden sind, umfassend einen Schritt, der aus Folgendem besteht:

- Erfassen (110) eines Radarbilds (I(x,y)) eines Schiffs, wobei das erfasste Bild ein Entfernung-Doppler-Bild ist; wobei das Verfahren ferner die Schritte umfasst, die aus Folgendem bestehen:

- Extrahieren (120) des oder jedes Artefaktbereichs aus dem Radarbild (I(x,y)), der einem Artefakt aufgrund von Bugwellen oder dem Kielwasser des Schiffs entspricht, wobei die Extraktion darauf beruht, dass sich der oder jeder Artefaktbereich (11, 12) über ein Band parallel zu der Dopplerachse erstreckt, wobei die Extraktion zu einem Bild der Artefaktbereiche ($R_3(x,y)$) führt;
- Erstellen (130) einer Maske des Schiffs (M(x,y)); und
- Abschwächen (140) der Abtastwerte des Radarbilds (I(x,y)), die zu dem oder jedem Artefaktbereich des Bilds der Artefaktbereiche ($R_3(x,y)$) gehören und die sich außerhalb der Schiffsmaske (M(x,y)) befinden, sodass ein abgeschwächtes Bild ($I_f(x,y)$) entsteht,

**dadurch gekennzeichnet, dass** der Schritt, der aus einem Extrahieren (120) des oder jedes Artefaktbereichs auf der Berechnung des Verhältnisses eines vertikalen Kontrasts (CV(x,y)) entlang der Entfernungsachse zu einem horizontalen Kontrast (CH(x,y)) entlang der Dopplerachse des Radarbilds (I(x,y)) und dem Auswählen eines Artefaktbereichs als Bereich, innerhalb dessen das Verhältnis größer als ein Schwellenverhältnis ist, besteht, wobei ein Kontrast eines Abtastwerts durch Vergleichen der Leistung des Abtastwerts mit der Leistung einer oder mehrerer benachbarter Abtastwerte bestimmt wird, die sich für den horizontalen Kontrast in der gleichen Zeile und für den vertikalen Kontrast in der gleichen Spalte befinden.

**2.** Verfahren (100) nach Anspruch 1, wobei das Radarbild (I(x,y)) ein SAR-Radarbild oder ein ISAR-Radarbild ist.

**3.** Verfahren (100) nach Anspruch 1 oder 2, wobei der oder jeder Bereich, innerhalb dessen das Verhältnis größer als ein Schwellenverhältnis ist, einem morphologischen Öffnungs- oder Schließvorgang unterzogen wird, bevor er mit einem Artefaktbereich assoziiert wird.

**4.** Verfahren (100) nach einem der vorherigen Ansprüche, wobei der oder jeder Bereich, innerhalb dessen das Verhältnis größer als ein Schwellenverhältnis ist, entsprechend seiner Ausdehnung gewichtet wird, bevor er mit einem Artefaktbereich assoziiert wird.

**5.** Verfahren nach (100) einem der vorherigen Ansprüche, wobei der Schritt eines Erstellens (130) einer Maske des Schiffs (M(x,y)) aus Folgendem besteht:

- Anwenden eines Schwellenwerts auf das Radarbild (I(x,y)), um ein schwellenwertgewichtetes Bild zu erlangen;
- Assoziieren den Einheitswert und sonst den Nullwert mit jedem Abtastwert, der den Schwellenwert überschreitet, um ein binäres Bild (B(x,y)) zu erlangen;
- Bestimmen einer Decksgeraden (Dp) anhand des binären Bilds, wobei die Decksgerade eine untere Kontur der Schiffsmaske darstellt;
- Bestimmen der oberen Kontur (C) der Schiffsmaske aus einer Größe, die einer Änderung entlang der Dopplerachse eines Kontrasts des binären Bilds (B(x,y)) entspricht.

**6.** Verfahren (100) nach einem der vorherigen Ansprüche, wobei das abgeschwächte Bild $I_f(x,y)$ aus dem Radarbild (I(x,y)) gemäß der folgenden Beziehung ausgedrückt wird:

$$I_f(x,y) = I(x,y) - 10\log_{10}(C_H(x,y)/C_V(x,y))$$

für die Abtastwerte, die sich in dem oder jedem Artefaktbereich und außerhalb der Schiffsmaske befinden.

**7.** Radarsystem, **dadurch gekennzeichnet, dass** es ein Verfahren zum Abschwächen von Artefakten in Zusammenhang mit Bugwellen oder Kielwasser auf Radarbildern eines Schiffs gemäß einem der Ansprüche 1 bis 6 implementiert.

## Claims

**1.** A method (100) for mitigating bow wave or wake artefacts in radar images of a vessel, comprising a step of:

- acquiring (110) a radar image (I(x,y)) of a vessel, said acquired image being a Range-Doppler image; the method further comprises the steps of:

- extracting (120) from the radar image (I(x,y)) the or each artefact area which corresponds to an artefact due to bow waves or the wake of the vessel, the extraction being based on the or each artefact area (11, 12) extending over a band parallel to the Doppler axis, the extraction leading to an image of the artefact areas ($R_3(x,y)$);
- developing (130) a mask of the vessel (M(x,y)); and,
- attenuating (140) the radar image samples (I(x,y)) which belong to the or each artefact area of the artefact area image ($R_3(x,y)$) and which lie outside the mask of the vessel (M(x,y)) so as to obtain an attenuated image ($I_f(x,y)$),

**characterised in that** the step of extracting (120) the or each artefact area is based on calculating the ratio of a vertical contrast (CV(x,y)) along the range axis to a horizontal contrast (CH(x,y)) along the Doppler axis of the radar image (I(x,y)) and selecting an artefact area as the area within which said ratio is greater than a threshold ratio, a contrast of a sample being determined by comparing the power of said sample with that of one or more neighbouring samples, which are located on the same row for the horizontal contrast and on the same column for the vertical contrast.

**2.** The method (100) according to claim 1, wherein the radar image (I(x,y)) is a SAR radar image or an ISAR radar image.

3. The method (100) according to claim 1 or claim 2, wherein the or each area within which said ratio is greater than a threshold ratio undergoes a morphological opening or closing operation before being associated with an artefact area.

4. The method (100) according to any of the preceding claims, wherein the or each area within which said ratio is greater than a threshold ratio is weighted based on its extent before being associated with an artefact area.

5. The method (100) according to any of the preceding claims, wherein the step of developing (130) a mask of the vessel (M(x,y)) consists in:

- applying a threshold to the radar image (I(x,y)) in order to obtain a thresholded image;
- associating the unit value with each sample exceeding said threshold and the zero value otherwise, so as to obtain a binary image (B(x,y));
- determining a deck line (Dp) from the binary image, the deck line being a lower contour of the vessel mask;
- determining the upper contour (C) of the vessel mask from a quantity corresponding to a variation along the Doppler axis of a contrast of the binary image (B(x,y)).

6. The method (100) according to any of the preceding claims, wherein the attenuated image $I_f(x,y)$ is expressed from the radar image (I(x,y)) according to the relationship:

$$I_f(x,y) = I(x,y) - 10\log_{10}(C_H(x,y)/C_V(x,y))$$

for samples within the or each artefact area and outside the vessel mask.

7. A radar system, **characterised in that** it implements a method of attenuating bow wave or wake artefacts in radar images of a vessel according to any of claims 1 to 6.

FIG.1

FIG.2

EP 3 457 168 B1

I(x,y)

11

10

12

y

x

## FIG.3

R₃(x,y)

y

x

## FIG.4

M(x,y)

## FIG.5

I_f(x,y)

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **L. GAGNON et al.** Hierarchical Classifier Design for Airborne SAR Images of Ships. *SPIE Proc. #3371, conférence « Automatic Target Récognition VIII », Orlando,* 1998

- Maritime automated targets recognition algorithm test bed for high résolution ISAR imagery. **CROSS PATRICK L.** 2913 IEEE INTERNATIONAL CONFERENCE ON TECHNOLOGIES FOR HOMELAND SECURITY(HST). IEEE, 12 Novembre 2013, 369-314